# EUROPEAN PATENT APPLICATION

(11) **EP 2 275 956 A1**
(43) Date of publication of application: **19.01.2011**
(21) Application number: 10167028.9
(22) Date of filing: 23.06.2010
(51) Int. Cl.: G06F 17/30, H04N 5/00, H04N 5/781

(54) **Search for and retrieval of a high quality version of video content recorded at lower quality**

(30) Priority: 30.06.2009 JP 2009154922
(71) Applicant: Sony Corporation, Tokyo 108-0075 (JP)
(72) Inventor: Miki, Nanami, Tokyo 108-0075 (JP)
(74) Representative: Körber, Martin Hans

(57) **Abstract**

An information processing apparatus includes: a search request means for requesting another information processing apparatus to search metadata of a high-picture quality content corresponding to a content having higher picture quality than already stored content; a metadata acquisition means for acquiring the metadata supplied from another information processing apparatus as a search result in response to the request by the search request means; an association means for associating information indicating a providing source of the high-picture quality content included in the metadata acquired by the metadata acquisition means with metadata of the content; a high-picture quality content acquisition means for acquiring the high-picture quality content from the providing source indicated by the information associated with the metadata of the content by the association means; and a high-picture quality content reproduction means for reproducing the high-picture quality content acquired by the high-picture quality content acquisition means.

## Description

### BACKGROUND OF THE INVENTION

### 1. Field of the Invention

The present invention relates to an information processing apparatus, a method and a program thereof, and particularly relates to an information processing apparatus, a method and a program thereof allowing a user to view contents with high picture quality more easily.

### 2. Description of the Related Art

In related art, in a recording system which records contents, when the recording is performed, for example, in a state in which a free area of a recording medium such as a hard disk is short, a bit rate of a content to be recorded is reduced for recording the content (refer to JP-A-2006-333279 (Patent Document 1).

There is a case where a content is delivered by being converted into an HD (High Definition) content after the content broadcasted/delivered with SD (Standard Definition) is recorded in the recording medium.

### SUMMARY OF THE INVENTION

As described above, when the recorded data is SD data, it is difficult for the user to view the content with HD even when a DTV (Digital Television) displaying pictures of the content corresponds to HD.

For example, a method of converting the content recorded with SD into the content with HD may be considered, however, an expensive image processing circuit and the like for conversion may be necessary and thus costs may be increased.

Accordingly, for example, a method of acquiring the content converted into HD from a server and the like anew can be considered. However, it is necessary to search a server as a providing source of the content to acquire the content in that case. It is also necessary that the user verifies that the content provided by the server has higher picture quality than the content recorded in the recording medium as well as has a format which can be reproduced, which makes operation complicated.

Thus, it is desirable to allow a user to view contents with higher picture quality more easily.

According to an embodiment of the invention, there is provided an information processing apparatus including a search request means for requesting another information processing apparatus to search metadata of a high-picture quality content corresponding to a content which has higher picture quality than the content, a metadata acquisition means for acquiring the metadata supplied from another information processing apparatus as a search result in response to the request by the search request means, an association means for associating information indicating a providing source of the high-picture quality content which is included in the metadata acquired by the metadata acquisition means with metadata of the content, a high-picture quality content acquisition means for acquiring the high-picture quality content from the providing source of the high-picture quality content indicated by the information associated with the metadata of the content by the association means when the content is processed and a high-picture quality content reproduction means for reproducing the high-picture quality content acquired by the high-picture quality content acquisition means.

The search request means can supply a search key including information for identifying the contents, information concerning picture quality of the content and information concerning setting available by the information processing apparatus to another information processing apparatus to allow the apparatus to thereby search for metadata of the high-picture quality content by using the search key.

The apparatus further includes a selection receiving means for receiving a selection instruction of a content to be processed and an acquisition verification means for verifying whether the high-picture quality content corresponding to the content selected by the selection instruction received by the selection receiving means is acquired or not, in which the high-picture quality content acquisition means can acquire the high-picture quality content from the providing source of the high-picture quality content when the acquisition of the high-picture quality content is verified by the acquisition verification means.

The apparatus further includes a flag information management means for managing flag information indicating existence of the high-picture quality content and setting the flag information when the information is associated with metadata of the content by the association means and an existence verification means for verifying whether there exists the high-picture quality content corresponding to the content selected by the selection instruction received by the selection receiving means or not based on the flag information managed by the flag information management means, in which the high-picture quality content acquisition means can acquires the high-picture quality content from the providing source of the high-picture quality content when the acquisition of the high-picture quality content is verified by the acquisition verification means.

The apparatus can further include a low-picture quality content reproduction means for reproducing the content having lower picture quality than the high-picture quality content when it is verified that there does not exist the high-picture quality content by the existence verification means.

The apparatus further includes a list presentation means for presenting a list of contents which can be processed, in which the selection receiving means can receive selection instruction for selecting a content to be processed from the list presented by the list presentation means.

The search request means can request another information processing apparatus to search metadata of the high-picture quality content corresponding to the content selected by the selection instruction received by the selection receiving means.

The apparatus further includes a search destination information management means for managing search destination information indicating another information processing apparatus to which the search for metadata of the high-picture quality content is requested, in which the search request means can request another information processing apparatus included in the search destination information managed by the search destination information management means to search metadata of the high-picture quality content.

Also according to another embodiment of the invention, there is provided an information processing method including the steps of requesting another information processing apparatus to search metadata of a high-picture quality content corresponding to a content which has higher picture quality than the content by a search request means of the information processing apparatus, acquiring the metadata supplied from another information processing apparatus as a search result in response to the request by a metadata acquisition means of the information processing apparatus, associating information indicating a providing source of the high-picture quality content which is included in the metadata to be acquired with metadata of the content by an association means of the information processing apparatus, acquiring the high-picture quality content from the providing source of the high-picture quality content indicated by the information associated with the metadata of the content when the content is processed by a high-picture quality content acquisition means of the information processing apparatus and reproducing the acquired high-picture quality content by a high-picture quality content reproduction means of the information processing apparatus.

According to still another embodiment of the invention, there is provided a computer-readable medium storing a program for allowing a computer to function as a search request means for requesting another information processing apparatus to search metadata of a high-picture quality content corresponding to a content which has higher picture quality than the content, a metadata acquisition means for acquiring the metadata supplied from another information processing apparatus as a search result in response to the request by the search request means, an association means for associating information indicating a providing source of the high-picture quality content which is included in the metadata acquired by the metadata acquisition means with metadata of the content, a high-picture quality content acquisition means for acquiring the high-picture quality content from the providing source of the high-picture quality content indicated by the information associated with the metadata of the content by the association means when the content is processed and a high-picture quality content reproduction means for reproducing the high-picture quality content acquired by the high-picture quality content acquisition means.

According to the embodiment of the invention, the search of metadata of the high-picture quality content corresponding to a content which has higher picture quality than the content is requested to another information processing apparatus, metadata supplied from another information processing apparatus as a search result in response to the request is acquired, information indicating the providing source of the high-picture quality content included in the metadata is associated with metadata of the content, the high-picture quality content is acquired from the providing source indicated in the information associated with the metadata of the content and the acquired high-picture quality content is reproduced.

According to the embodiments of the invention, information can be processed. Particularly, contents can be viewed with higher picture quality more easily.

### BRIEF DESCRIPTION OF THE DRAWINGS

Fig. 1 is a block diagram showing a main configuration example of an information processing system to which the invention is applied;
Fig. 2 is a block diagram showing a main configuration example of a hard disk recorder of Fig. 1;
Fig. 3 is a functional block diagram showing an example of main functions included in a CPU of Fig. 2;
Fig. 4 is a block diagram showing a main configuration of a metadata management server of Fig. 1;
Fig. 5 a block diagram showing a main configuration of a content providing server of Fig. 1;
Fig. 6 is a flowchart for explaining an example of the whole processing flow of the information processing system;
Fig. 7 is a flowchart for explaining an example of the flow of record creating processing;
Fig. 8 is a chart for explaining an example of a content management database;
Fig. 9 is a flowchart for explaining an example of the flow of record update processing;
Fig. 10 is a flowchart for explaining an example of the flow of record update processing;
Fig. 11 is a chart showing an example of a content list presentation screen;
Fig. 12 is a chart showing an example of a content acquisition verification screen;
Fig. 13 is a flowchart for explaining another example of the flow of high-picture quality content search processing;
Fig. 14 is a flowchart for explaining another example of the whole processing flow of the information processing system;
Fig. 15 is a flowchart for explaining another example of the flow of content reproduction example;
Fig. 16 is a block diagram showing another configuration example of an information processing system to which the invention is applied;
Fig. 17 is a block diagram showing a main configuration example of a hard disk recorder of Fig. 16;
Fig. 18 is a functional block diagram showing an example of main functions included in a CPU of Fig. 17;
Fig. 19 is a block diagram showing a main configuration example of a content providing server of Fig. 16; and
Fig. 20 is a flowchart for explaining further another example of the whole processing flow of the information processing system.

### DESCRIPTION OF THE PREFERRED EMBODIMENTS

Hereinafter, modes for carrying out the invention (referred to as embodiments in the following description) will be explained. The explanation will be made in the following order.
1. First Embodiment (Information processing system)
2. Second Embodiment (Information processing system)
3. Third Embodiment (Information processing system)

### <First Embodiment>

### [Configuration of an information processing system]

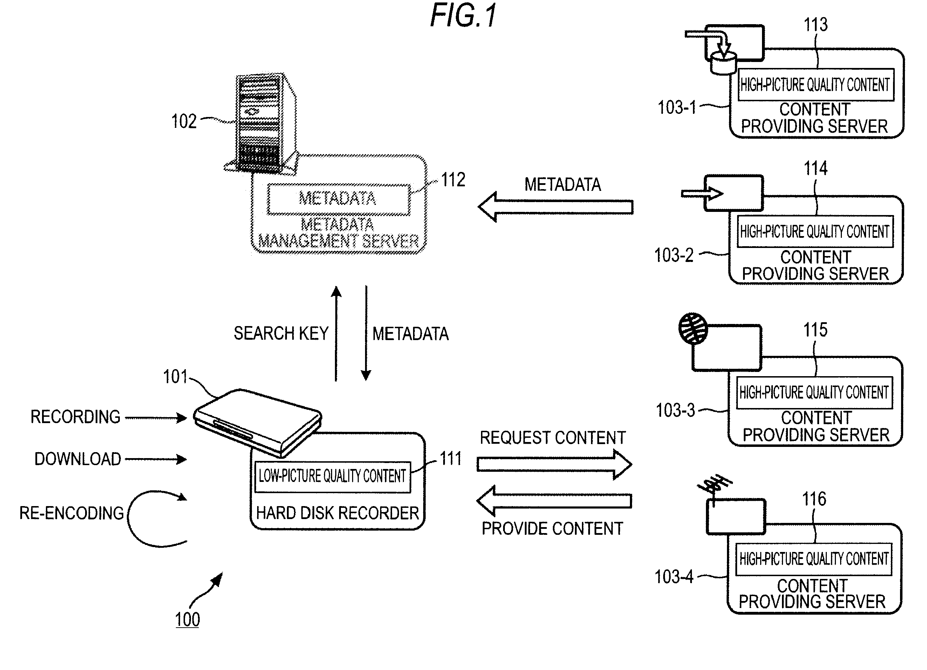

Fig. 1 is a block diagram showing a main configuration example of an information processing system to which the invention is applied.

An information processing system 100 shown in Fig. 1 is a system providing contents including video and audio to a user of a hard disk recorder 101. The information processing system 100 includes a hard disk recorder 101, a metadata management server 102 and content providing servers 103-1 to 103-4. The hard disk recorder 101, the metadata management server 102 and the content providing servers 103-1 to 103-4 are connected to one another through a network such as Internet.

The hard disk recorder 101 provides the user with contents recorded in the recording medium such as the hard disk. The hard disk recorder 101 performs so-called recording, which receives and records contents broadcasted by, for example, ground-wave digital broadcast, satellite broadcast and the like. The hard disk recorder 101 can download and record contents from the server through Internet and the like.

At this time, the hard disk recorder 101 records the acquired content in the hard disk in a state in which the content is encoded in a given format. For example, when the content is not encoded, the hard disk recorder 101 records the content in the hard disk after encoding the content in the given format.

When resolution or the bit rate of pictures is changed even in the case that the acquired content is encoded, the hard disk recorder decodes the acquired content once and encodes the content again to record the content in the hard disk.

The hard disk recorder 101 can reproduce the content recorded in the hard disk based on, for example, user instruction by decoding the content, and can record it again in the hard disk after performing editing and picture processing and the like and performing encoding again.

The hard disk recorder 101 decodes and reproduces a content stored in the hard disk based on, for example, the user instruction as described above, displaying video in a monitor and outputting audio from the speaker. That is, the hard disk recorder 101 allows the user to view the content.

The hard disk recorder 101 can perform streaming reproduction while receiving a content from the server which performs streaming delivery of contents based on the user instruction to allow the user to view the content. The hard disk recorder 101 can also receive and reproduce contents broadcasted through Internet, ground waves or the like to allow the user to view the contents.

The metadata management server 102 manages information (metadata) concerning contents provided by the content providing servers 103-1 to 103-4. The content providing servers 103-1 to 103-4 previously register metadata of contents to be provided by respective servers in the metadata management server 102 (metadata 112). The metadata management server 102 registers the metadata in a database and manages the data to provide the metadata based on requests from the hard disk recorder 101 and the like.

The hard disk recorder 101 supplies a search key as information for searching a desired content to the metadata management server 102. The metadata management server 102 searches metadata of the content corresponding to the search key and returns the metadata to the hard disk recorder 101 as a search result.

In the metadata, information indicating an access destination of the server providing the content (for example, any of the content providing servers 103-1 to 103-4) (for example, URL (Uniform Resource Locator) and the like) is shown. The hard disk recorder 101 makes an access to the server providing the content (for example, any of the content providing servers 103-1 to 103-4) and requests the desired content.

The content providing servers 103-1 to 103-4 are servers providing contents respectively. The content providing server 103-1 provides a download service of contents. For example, when the hard disk recorder 101 requests a desired content, the content providing server 103-1 supplies data of the content to the hard disk recorder 101, where so-called download is performed.

The content providing server 103-2 provides a streaming delivery serves of contents. For example, when the hard disk recorder 101 requests a desired content, the content providing server 103-2 performs streaming delivery of data of the content to the hard disk recorder 101.

The content providing server 103-3 provides a broadcasting service of contents through Internet. The content providing server 103-3 broadcasts contents in accordance with a given schedule, and, for example, when hard disk recorder 101 requests a content, the content providing server 103-3 delivers the content during broadcasting also to the hard disk recorder 101.

The content providing server 103-4 provides a broadcasting service of contents using communication media other than Internet such as satellite broadcast or ground-wave digital broadcast. For example, when the hard disk recorder 101 makes a request, the content providing server 103-4 permits reception of a content during broadcasting at that time. The hard disk recorder 101 in which the reception is permitted receives the content during broadcasting using a given tuner and so on. For example, data of the content is encrypted. In such case, the hare disk recorder 101 decodes data by using permission acquired from the content providing server 103-4.

In the contents, picture setting including, for example, resolution, the bit rate and so on can be variously set. Therefore, contents having different picture qualities may exist even when the contents are the same, and there is a case where the hard disk recorder 101 records a low-picture quality content having low resolution and bit rate (low-picture quality content 111) in the hard disk.

For example, there is a case where the hard disk recorder 101 acquires and records a SD (Standard-Definition) content in the hard disk. Also, for example, there is a case where the hard disk recorder 101 encodes the acquired content again and records the content by reducing the bit rate in accordance with the free area of the hard disk, user instruction and so on. Furthermore, there is a case where the hard disk recorder 101 encodes a content recorded in the hard disk again to reduce the bit rate.

According to various reasons as described above, there is a case where the content providing servers 103-1 to 103-4 provide a content (high-picture quality content) having higher picture quality than the low-picture quality content 111 which has the same contents as the low-picture quality content 111 recorded in the hard disk (any of the high-picture quality contents 113 to 116).

For example, there is a case where the low-picture quality content 111 is SD and the high-picture quality contents 113 to 116 are HD (High-Definition). For example, the bit rates of the high-picture quality contents 113 to 116 are higher than the bit rate of the low-quality picture content 111.

When there exists a server providing the high-picture quality content corresponding to the low-quality picture content 111 and the high-picture quality picture content can be reproduced, the hard disc recorder 101 can acquire the high-picture quality content and allows the user to view the content instead of the low-quality picture content 111.

For example, when the low-quality picture content 111 is recorded in the hard disk, the hard disc recorder 101 supplies a search key to the metadata management server 102, requesting metadata of the high-picture quality picture content corresponding to the low-quality content 111. When acquiring the metadata of the high-picture quality picture content corresponding to the low-quality content 111, the hard disk recorder 101 registers the metadata in the database.

When the user requests the viewing of the low-picture quality content 111, the hard disk recorder 101 notifies the user of the existence of the high-picture quality content corresponding to the low-picture quality content 111. When the user requests the viewing of the high-picture quality content, the hard disk recorder 101 requests a providing source of the high-picture quality to provide the high-picture quality based on metadata and acquires the content to provide the content to the user.

As described above, the hard disk recorder 101 links the recorded low-quality picture content to the high-picture quality contents in the device other than the device corresponding to the low-picture quality content. Accordingly, it is not necessary that the user searches the existence of the high-picture quality picture content corresponding to the low-quality picture content 111. That is, the user can view contents in higher picture quality more easily.

In the following description, in the case where it is not necessary that the content providing servers 103-1 to 103-4 are distinguished from one another when they are explained, they are referred to as the content providing server 103. A method of providing contents by the content providing server 103 is optional, and contents may be provided by using methods other than the method shown in Fig. 1.

The configuration of the information processing system 100 shown in Fig. 1 is just an example, and any configurations may be applied as long as the configuration can provide contents. For example, the number of the hard disk recorder 101, the metadata management server 102 and the content providing server 103 is optional, and it may be larger than the example shown in Fig. 1 or smaller than that.

The explanation has been made in such a way that the hard disk recorder 101 to the content providing server 103 are connected by a network (not shown), however, the communication medium and the network configuration are optional as long as they are connected to one another in which communication is possible between them. For example, it is preferable that respective devices are connected by a network of wired communication or connected by a network of wireless communication. It is also preferable to configure the system in a state in which the network of wired communication and the network of wireless communication are mixed.

It is also preferable that respective apparatuses are connected through a hub or a router, and that they are connected not through them.

### [Configuration of devices]

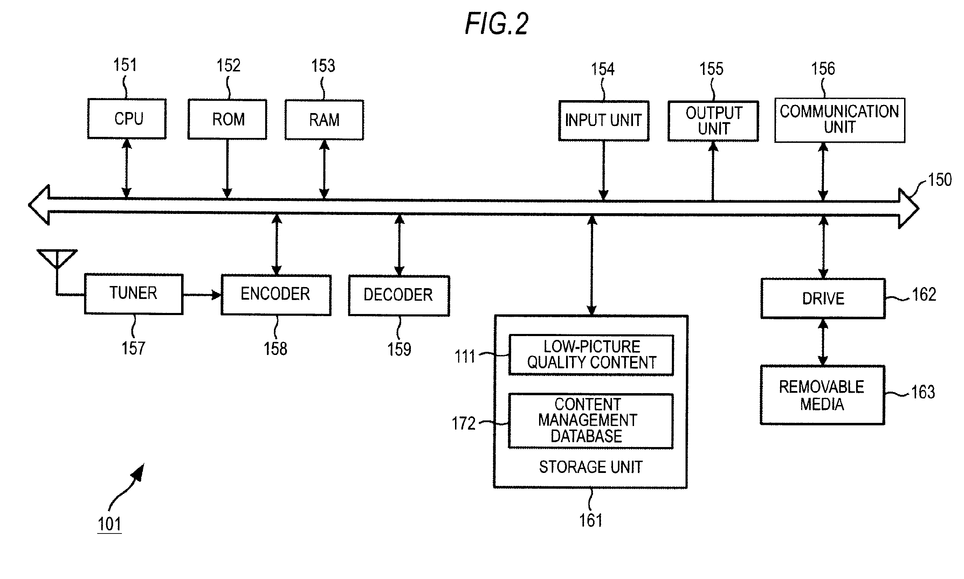

Fig. 2 is a block diagram showing a main configuration example of the hard disk recorder of Fig. 1.

As shown in Fig. 2, the hard disk recorder 101 includes a CPU 151, a ROM 152, a RAM 153, an input unit 154, an output unit 155, a communication unit 156, a tuner 157, an encoder 158, a decoder 159, a storage unit 161 and a drive 162.

The CPU (Central Processing Unit) 151 executes various processing in accordance with programs stored in the ROM (Read Only Memory) 152 and programs loaded from the storage unit 161 to the RAM (Random Access Memory) 153. Necessary data for executing various processing by the CPU 151 is also stored in the RAM 153 appropriately.

The input unit 154 includes, for example, an user interface such as a keyboard or a mouse, an infrared receiving section receiving control signals from a remote controller and the like or input terminals of video and audio.

The output unit 155 includes, for example, a display such as a CRT (Cathode Ray Tube) and an LCD (Liquid Crystal Display), a speaker or output terminals of video and audio.

The communication unit 156 includes an Ethernet interface, a modem and the like. The communication unit 156 performs communication processing with other devices through networks including Internet.

The tuner 157 controls receiving channels of given broadcasting services such as ground-wave digital broadcast and satellite broadcast. The tuner 157 receives contents broadcasted at channels selected by the user and supplies the contents to the encoder 158.

The encoder 158 encodes data of contents in a given format. The decoder 159 decodes the encoded data of contents by a method corresponding to the encoding.

The storage unit 161 is a recording medium including, for example, a hard disk and the like. It is preferable that the storage unit 161 may be a medium other than the hard disk as long as it is a storage medium having a relatively large capacity enough to record the contents, for example, it may be a SSD (Solid State Drive).

To the drive 162, removable media 163 such as a magnetic disk, an optical disk, a magneto-optical disk or a semiconductor disk are appropriately mounted. The drive 162 reads information from the mounted removable media 163 and writes information to the mounted removable media 163.

It is also preferable to record computer programs in the removable media 163. The computer program read from the removable media 163 is installed into the storage unit 161 according to need.

The CPU 151, the ROM 152, the RAM 153, the input unit 154, the output unit 155, the communication unit 156, the encoder 158, the decoder 159, the storage unit 161 and the drive 162 are connected to one another through a bus 150. These units of the CPU 151 to the drive 162 give and receive information through the bus 150.

In a storage area of the storage unit 161, not only the low-picture quality content 111 and programs but also a content management database 172 is stored. The content management database 172 is a database for managing information (metadata and the like) of contents (including the low-picture quality content 111) stored in the storage unit 161.

It is naturally preferable that the hard disk recorder 101 has configurations other than the above configuration.

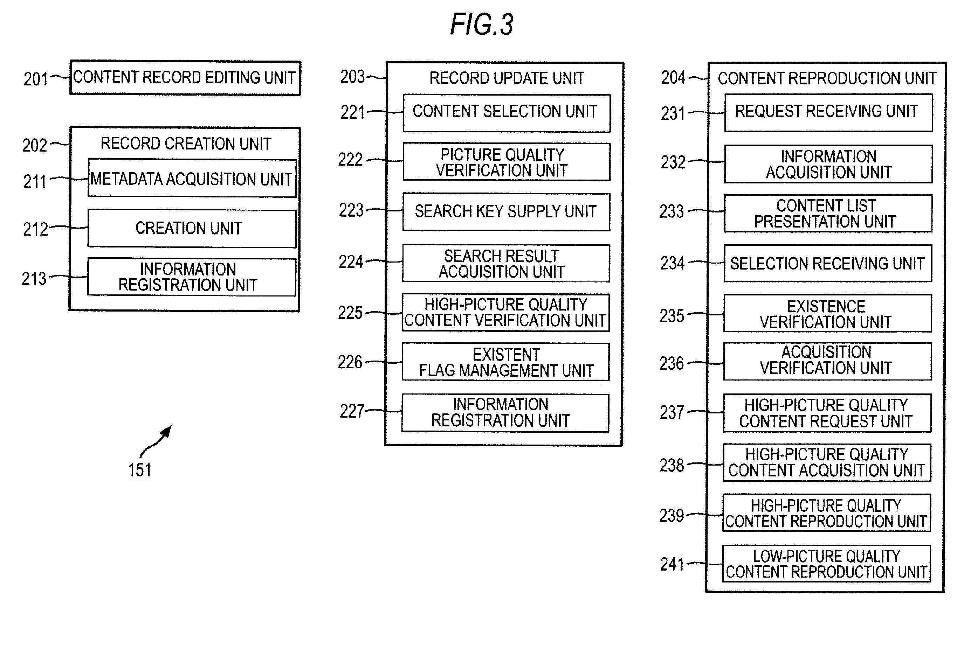

Fig. 3 is a functional block diagram showing an example of main functions included in the CPU 151 of Fig. 2. The CPU 151 realizes various functions shown in Fig. 3 by executing programs.

The CPU 151 includes a content record editing unit 201, a record creation unit 202, a record update unit 203 and a content reproduction unit 204.

The content record editing unit 201 performs processing with respect to contents including, for example, recording or editing of contents, picture processing, decoding, encoding and so on.

The record creation unit 202 performs processing concerning creation of records in the content management database 172. The record creation unit 202 includes a metadata acquisition unit 211, a creation unit 212 and an information registration unit 213.

The metadata acquisition unit 211 performs processing of acquiring metadata of contents from other devices. The creation unit 212 updates the content management database 172, creating a new record. The information registration unit 213 resisters information included in metadata acquired by the metadata acquisition unit 211 in the record in the content management database 172 created by the creation unit 212.

The record update unit 203 performs processing of updating records in the content management database 172. The record update unit 203 includes a content selection unit 221, a picture quality verification unit 222, a search key supply unit 223, a search result acquisition unit 224, a high-picture quality content verification unit 225, an existent flag management unit 226 and an information registration unit 227.

The content selection unit 221 performs processing of allowing the user and the like to select a content. The picture quality verification unit 222 verifies setting of picture quality of the selected content. The search key supply unit 223 supplies a search key to the metadata management server 102 to request the search of metadata of the content to be processed. The search result acquisition unit 224 acquires the search result as a response to the request.

The high-picture quality content verification unit 225 verifies whether there exists a content corresponding to the content to be processed, which has higher quality than the content to be processed based on the search result. The existence flag management unit 226 performs management of an existence flag indicating existence of the high-picture quality content. The information registration unit 227 performs registration of information to the content management database 172.

The content reproduction unit 204 performs processing concerning reproduction of contents. The content reproduction unit 204 includes a request receiving unit 231, an information acquisition unit 232, a content list presentation unit 233, a selection receiving unit 234, an existence verification unit 235 and an acquisition verification unit 236. The content reproduction unit 204 further includes a high-picture quality content request unit 237, a high-picture quality content acquisition unit 238, a high-picture quality content reproduction unit 239 and a low-picture quality content reproduction unit 241.

The request receiving unit 231 receives a request concerning the content reproduction. The information acquisition unit 232 acquires information from the content management database 172. The content list presentation unit 233 creates a content list by using information acquired by the information acquisition unit 232 and presents the list.

The selection receiving unit 234 receives selection of a content to be reproduced from the content list by the user and the like. The existence verification unit 235 verifies existence of the high-picture quality content concerning the selected content. The acquisition verification unit 236 verifies whether the high-picture quality content is acquired or not with respect to the user and the like.

The high-picture quality content request unit 237 requests the high-picture quality content to the content providing server 103. The high-picture quality content acquisition unit 238 acquires the high-picture quality content supplied from the content providing server 103. The high-picture quality content reproduction unit 239 performs reproduction of the acquired high-picture quality content. The low-quality content reproduction 241 performs reproduction of the low-quality content stored in the storage unit 161.

The CPU 151 may naturally have configurations other than the above described configuration.

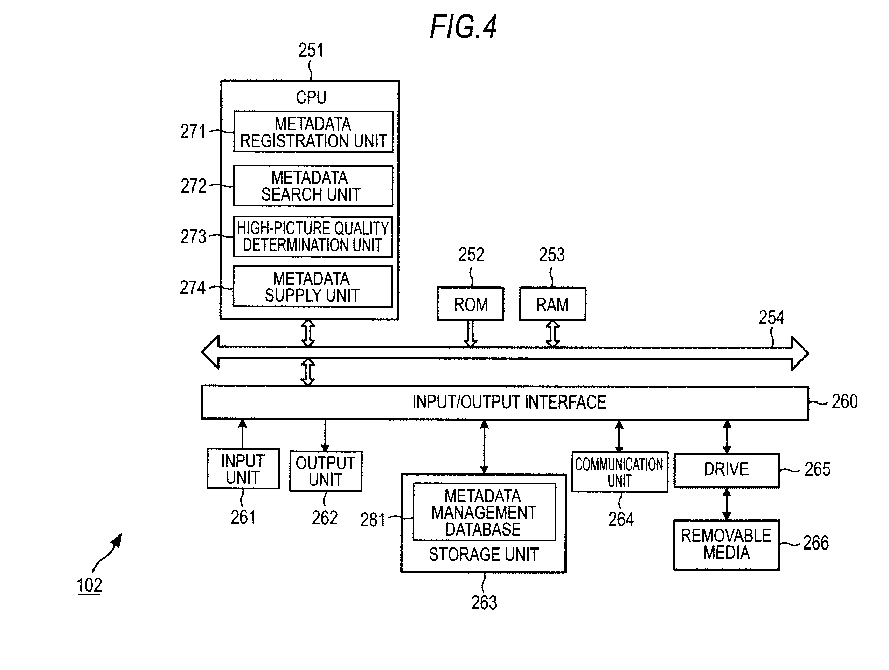

Fig. 4 is a block diagram showing a main configuration example of the metadata management server 102 of Fig. 1.

In Fig. 4, a CPU 251 of the metadata management server 102 executes various processing in accordance with programs stored in a ROM 252 or programs loaded from a storage unit 263 to a RAM 253. In the RAM 253, necessary data and the like when executing various processing by the CPU 251 is appropriately stored.

The CPU 251, the ROM 252 and the RAM 253 are connected to one another through a bus 254. An input/output interface 260 is also connected to the bus 254.

To the input/output interface 260, an input unit 261 including a keyboard, a mouse and the like, an output unit 262 including a display such as a CRT display and an LCD as well as a speaker, the storage unit 263 including a hard disk and the like and a communication unit 264 including an Ethernet interface, a modem and the like are connected. The communication unit 263 performs communication processing through networks including Internet.

To the input/output interface 260, a drive 265 is connected according to need, to which removable media 266 such as a magnetic disk, an optical disk, a magneto-optical disk and a semiconductor memory are appropriately mounted. Computer programs read from these media are installed to the storage unit 263 according to need.

In a storage area of the storage unit 263, a metadata management database 281 managing metadata supplied from the content providing server 103 is formed.

The CPU 251 includes functional blocks of a metadata registration unit 271, a metadata search unit 272, a high-picture quality determination unit 273 and a metadata supply unit 274. The CPU 251 realizes these functions by executing programs.

The metadata registration unit 271 performs processing concerning registration of metadata. The metadata search unit 272 performs processing concerning the search of metadata. The high-picture quality determination unit 273 determines whether the content corresponding to the searched metadata has high picture quality or not. The metadata supply unit 274 supplies the searched metadata to the request source.

The metadata management server 102 may naturally have configurations other than the above configuration as well as the CPU 251 may have functions other than the above functions.

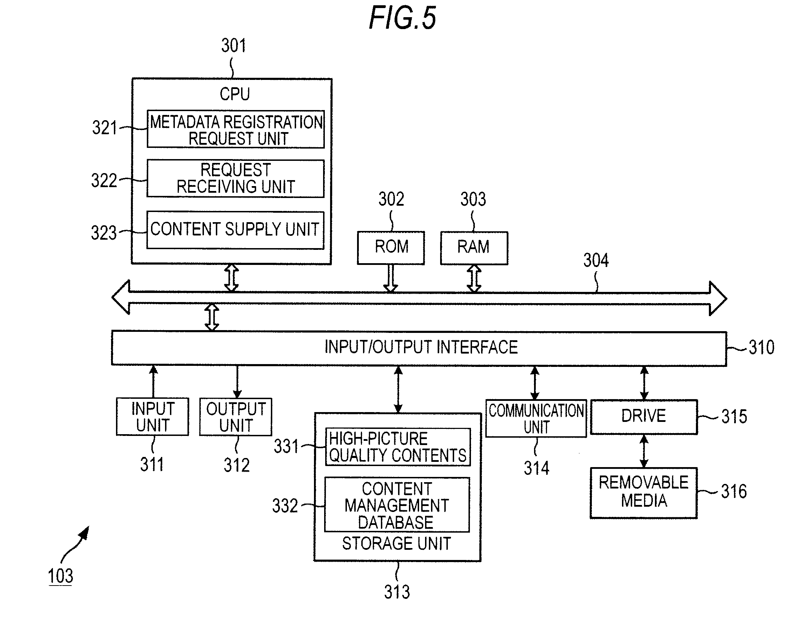

Fig. 5 is a block diagram showing a main configuration example of the content providing server 103 of Fig. 1.

In Fig. 5, a CPU 301 of the content providing server 103 executes various processing in accordance with programs stored in a ROM 302 or programs loaded from a storage unit 313 to a RAM 303. In the RAM 303, necessary data for executing various processing by the CPU 301 is also stored appropriately.

The CPU 301, the ROM 302 and the RAM 303 are connected to one another through a bus 304. An input/output interface 310 is also connected to the bus 304.

To the input/output interface 260, an input unit 311 including a keyboard, a mouse and the like, an output unit 312 including a display such as a CRT display, an LCD and the like as well as a speaker, the storage unit 313 including a hard disk and the like and a communication unit 314 including an Ethernet interface, a modem and the like are connected. The communication unit 314 performs communication processing through networks including Internet.

To the input/output interface 310, a drive 315 is connected according to need, to which removable media 316 such as a magnetic disk, an optical disk, a magneto-optical disk and a semiconductor memory are appropriately mounted. Computer programs read from these media are installed to the storage unit 313 according to need.

The storage 313 stores contents to be provided. That is, the high-picture quality contents 331 (corresponding to the high-picture quality contents 113 to 116 in Fig. 1) corresponding to low-picture quality contents stored in the hard disk recorder 101 may be recorded in the storage unit 313. A content management database 332 managing information concerning contents to be provided is formed in a storage area of the storage unit 313.

The CPU 301 includes functional blocks of a metadata registration request unit 321, a request receiving unit 322 and a content supply unit 323. The CPU 251 realizes these functions by executing programs.

The metadata registration request unit 321 requests the metadata management server 102 to register metadata of a content to be provided in the metadata management database 281. The request receiving unit 322 receives the request of the content from the hard disk recorder 101 and the like. The content supply unit 323 provides the requested content to the request source.

It is naturally preferable that the content providing server 103 has configurations other than the above configuration described above and the CPU 301 has functions other than the functions described above.

### [Processing flow]

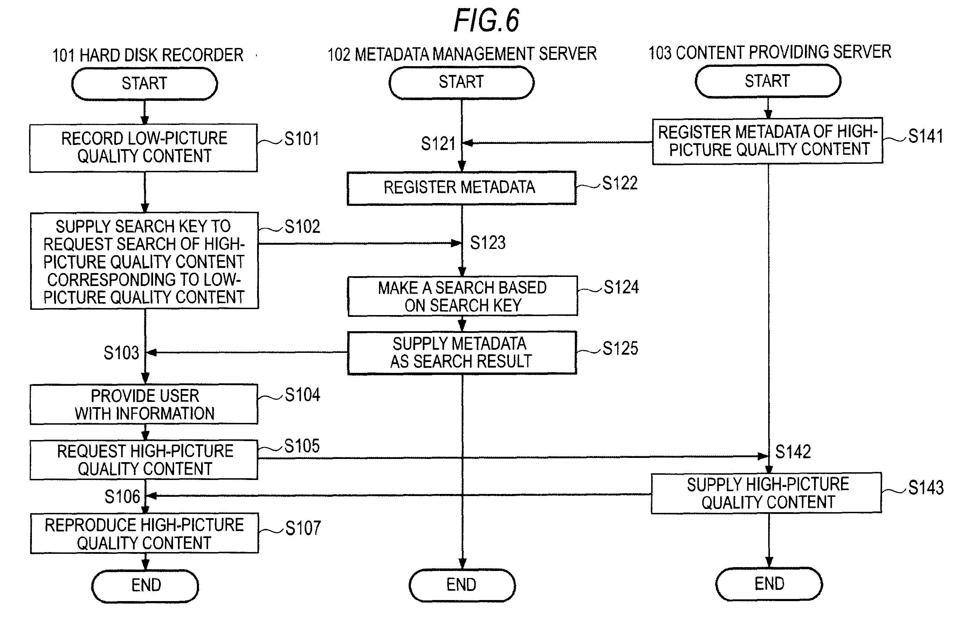

Next, the processing flow concerning providing of contents in the information processing system 100 having the above configuration will be explained. First, an example of the whole processing flow of the information processing system 100 will be explained with reference to a flowchart of Fig. 6.

The content record editing unit 201 of the hard disk recorder 101 records the low-picture quality content 111 acquired, for example, by receiving a television signal or by downloading the content in the storage unit 161 in Step S101.

The metadata registration request unit 321 of the content providing server 103 acquires metadata of the high-picture quality content 331 to be provided which is stored in the storage unit 313 from the content management database 332, supplying the data to the metadata management server 102 through the communication unit 314 to request the server to register the data into the metadata management database 281 in Step S141.

The metadata registration unit 271 of the metadata management server 102 receives the request through the communication unit 264 in step S121 and registers the supplied metadata in the metadata management database 281 in accordance with the request in Step S122.

In step S102, the record update unit 203 of the hard disk recorder 101 controls the communication unit 156 to supply a search key of a desired content to the metadata management server 102 to request the search for metadata of the high-picture quality content corresponding to the low-picture quality content 111.

When the metadata search unit 272 of the metadata management server 102 acquires the request through the communication unit 264 in step S123, the metadata search unit 272 searches for metadata of the desired content from the metadata management database 281 based on the acquired search key in step S124. The metadata search unit 272 supplies the metadata searched as a result of the search to the hard disk recorder as the request source through the communication unit 264 in Step S125.

In Step S103, the record update unit 203 of the hard disk recorder 101 acquires the search result through the communication unit 156 and updates the content management database 172.

In Step S104, the content reproduction unit 204 of the hard disk recorder 101 controls the input unit 154, the output unit 155 and so on to provide the user with information, allowing the user to select the content to be reproduced, and further allowing the user to select whether acquiring the high-picture quality content or not.

When the acquisition of the high-picture quality content is determined, the content reproduction unit 204 controls the communication unit 156 to request the high-picture quality content 331 corresponding to the low-picture quality content 111 the reproduction of which has been instructed by the user with respect to the content providing server 103 in Step S105. The content reproduction unit 204 specifies the content providing server 103 (request destination) providing the high-picture quality content 331 based on information of the providing source of the high-picture quality content 331 included in the metadata supplied from the metadata management server 102.

The request receiving unit 322 of the content providing server 103 acquires the request through the communication unit 314 in Step S142. The content supply unit 323 of the content providing server 103 acquires the requested high-picture quality content 331 from the storage unit 313, supplying the high-picture quality content 331 through the communication unit 314 to the hard disk recorder 101 as the request source in Step S143.

The content reproduction unit 204 of the hard disk recorder 101 acquires the high-picture quality content 331 supplied from the content providing server 103 through the communication unit 156 in Step S106. The content reproduction unit 204 reproduces the acquired high-picture quality content, outputting video and audio to the monitor and the speaker of the output unit 155 in Step S107.

According to the above, the user can view the high-picture quality content easily.

Next, the details of the processing flow of respective units performed as described above will be explained. When the content record editing unit 201 stores the content in the storage unit 161 in Step S101, the record creation unit 202 creates a new record in the content management database 172 and registers information concerning the content.

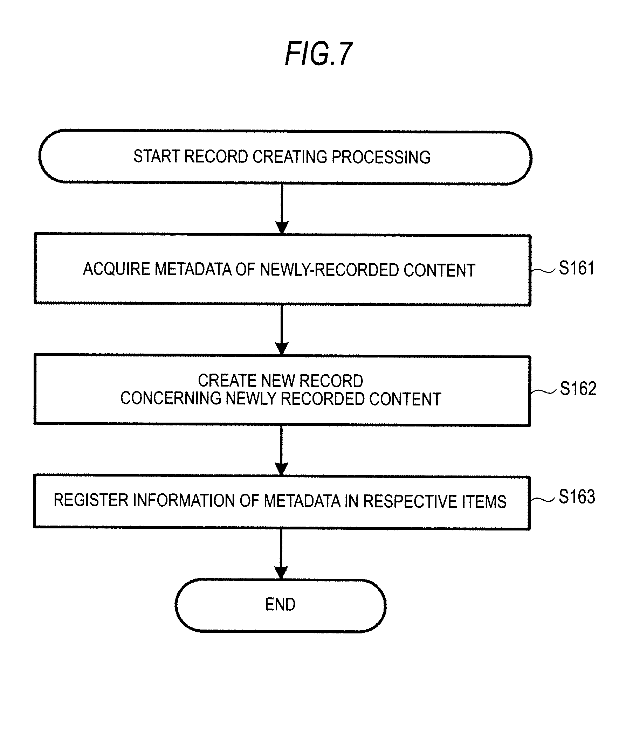

An example of the flow of record creating processing performed by the hard disk recorder 101 will be explained with reference to a flowchart of Fig. 7.

When the record creating processing is started, the metadata acquisition unit 211 of the record creation unit 202 acquires metadata of the content which has been newly recorded in the hard disk (storage unit 161) by the content record editing unit 201 in Step S161.

In Step S162, the creation unit 212 controls the content management database 172 of the storage unit 161 to create a new record concerning the newly recorded content.

In Step S163, the information registration unit 213 registers information of metadata acquired in Step S161 in respective items of the record which has been newly created.

When the processing of Step S163 is completed, the record creating processing is ended. Every time a new content is recorded, a new record is added to the content management database 172 as described above.

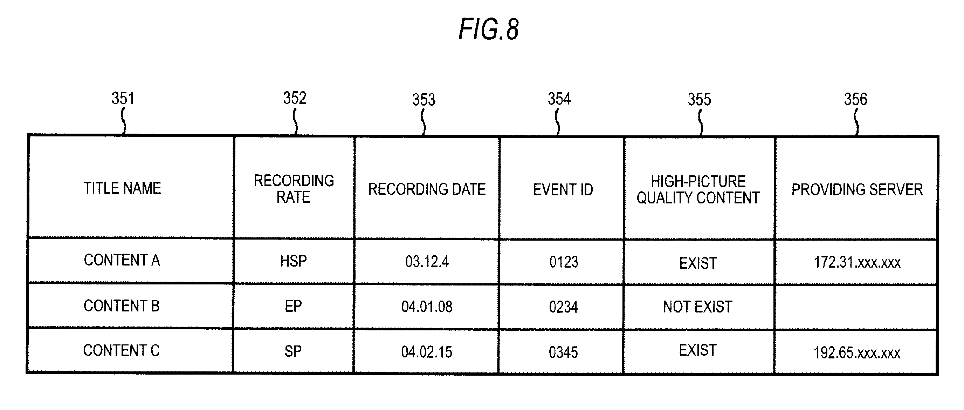

Fig. 8 is a chart for explaining an example of information registered in the content management database 172.

As shown in Fig. 8, the content management database 172 includes respective fields of a title name 351, a recording rate 352, a recording date 353, an event ID 354, a high-picture quality content existence flag (high-picture quality content) 355 and a providing server 356.

The title name 351 is a field for registering identification information such as title names. The recording rate 352 is a field for registering information indicating bit rates of contents.

In the recording rate 352, values of bit rates may be directly registered, or it is also preferable that information indicating bit rates indirectly such as recording modes indicating bit rates shown in Fig. 8 is registered. Also in the recording rate 352, not only bit rates but also information indicating resolution (for example, whether the resolution is SD or HD) is registered. It is further preferable that other information concerning picture quality may be registered.

The recording data 353 is a field for registering information indicating dates when contents have been recorded in the storage unit 161. The event ID 354 is a field for registering identification information of recording processing of contents.

The high-picture quality content existence flag 355 is a field for registering flag information indicating whether there exists a content corresponding to the recorded content having higher quality than the recorded content. The providing server 356 is a field for registering information (for example, URL and the like) indicating providing sources of the high-picture quality contents when there exist the high-picture quality contents.

It is naturally preferable that the content management database 172 has fields other than the above described fields.

Generally, existence of the high-picture quality content does not become clear at a time point when the content is recorded in the storage unit 161. Therefore, fields of the high-picture quality content existence flag 355 and the providing server 356 are empty at a time point when the record is newly created as described above.

It is naturally preferable that the existence of the high-picture quality content becomes clear at the point when the content is recorded in the storage unit 161 and these fields are filled. However, when there exists a record in which these fields are empty, the record update processing is performed and the existence of the high-picture quality content is verified.

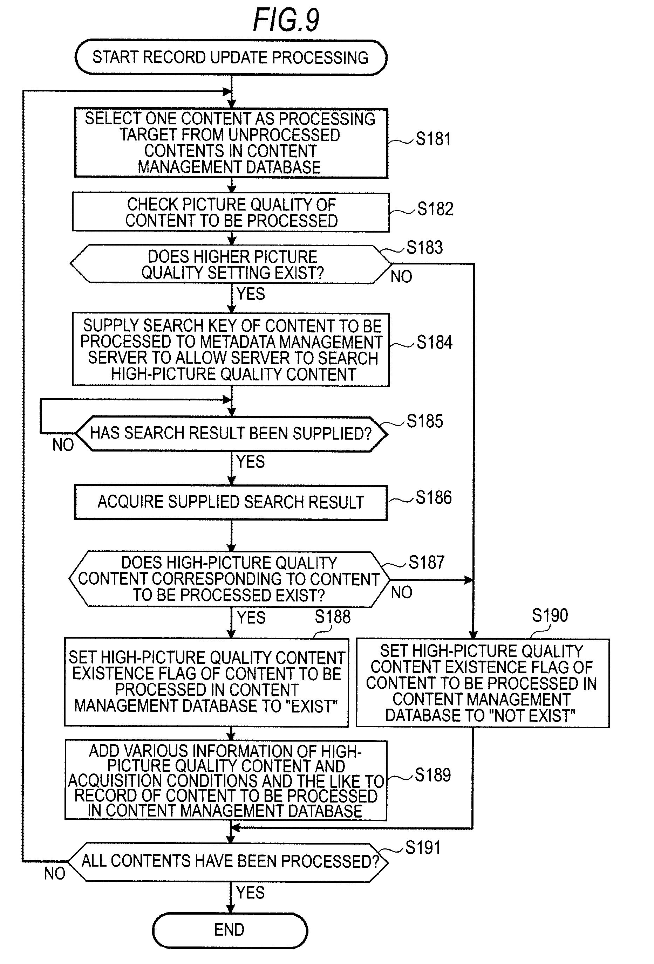

An example of the flow of record update processing will be explained with reference to a flowchart of Fig. 9. The processing corresponds to processing of Step S102 and Step S103 of Fig. 6.

When the record update processing is started, the content selection unit 221 selects one content as a processing target from unprocessed contents in the content management database 172 in Step S181.

In Step S182, the content selection unit 221 checks picture quality (resolution, the bit rate and so on) of the content to be processed by referring to, for example, the recording rate 352. In Step S183, the picture quality verification unit 222 determines whether there exists a higher picture quality setting which can be reproduced by the hard disk recorder 101 or not as a result of check. When it is determined that the higher picture quality setting exists, the processing proceeds to Step S184.

In Step S184, the search key supply unit 223 controls the communication unit 156 to supply the search key of the content to be processed to the metadata management server 102 to allow the metadata management server 102 to search the high-picture quality content.

The search key is information concerning the content to be processed, namely, information to be used for the search of (metadata) of the high-picture quality content corresponding to the content to be processed. For example, the search key includes information for identifying the content, information concerning picture quality of the content and information concerning the setting which is available (can be reproduced) by the hard disk recorder 101.

Information for identifying the content includes, for example, the title name, the program ID, the event ID, the recording date and the like. Information concerning picture quality of contents includes, for example, resolution, the bit rate and so on. Information concerning the setting available by the hard disk recorder 101 includes, for example, resolution (for example, HD or SD), the bit rate, the encoding method (for example, MPEG (Moving Picture Experts Group) 2 or AVC (Advanced Video Coding)) and so on.

It is naturally preferable that the search key includes information other than the above information.

When the search key is supplied, the search result acquisition unit 224 controls the communication unit 156 to determine whether the search result has been supplied or not, and waits until determined that the search result has been supplied in Step S185.

When the search result is acquired, the process proceeds to Step S186. The search result acquisition unit 224 acquires the supplied search result through the communication unit 156 in Step S186.

In Step S187, the high-picture quality content verification unit 225 determines whether there exists a high-picture quality content corresponding to the content to be processed or not. When metadata of the high-picture quality content corresponding to the content to be processed is supplied as the search result and it is determined that there exists the high-picture quality content corresponding to the content to be processed, the process proceeds to Step S188.

In Step S188, the existent flag management unit 226 sets the field of the high-picture quality content existence flag 355 of the record of the content to be processed in the content management database 172 to "exist". In Step S189, the information registration unit 227 adds various information of the high-picture quality content and other acquisition conditions (for example, URL of the providing source server of the high-picture quality content 331 and so on) to the record of the content to be processed in the content management database 172. When the processing of Step S189 is completed, the process proceeds to Step S191.

In Step S183, when it is determined that there does not exist the higher picture quality setting which can be reproduced by the hard disk recorder 101 concerning the content to be processed, the process proceeds to Step S190. Furthermore, when an error notification is supplied as the search result and it is determined that there does not exist the high-picture quality content corresponding to the content to be processed in Step S187, the process proceeds to Step S190.

In Step S190, the existent flag management unit 226 sets the field of the high-picture quality content existence flag 355 of the record of the content to be processed in the content management database 172 to "not exist". When the processing of Step S190 is completed, the process proceeds to Step S191.

In Step S191, the content selection unit 221 determines whether all contents have been processed or not. When there exists an unprocessed content, the process returns to Step S181 and processing after that will be repeated. When it is determined that all contents have been processed in Step S191, the record update processing is ended.

The record update processing as described above is executed regularly or irregularly at given timings. As described above, the hard disk recorder 101 performs the record update processing and verifies existence of the high-picture quality content 331 corresponding to the content (low-picture quality content 111) stored in the storage unit 161. Accordingly, the hard disk recorder 101 can easily provide the user with the high-picture quality content 331 corresponding to the low-picture quality content 111 the reproduction of which has been instructed by the user. As a result, the user can view the higher picture quality content easily.

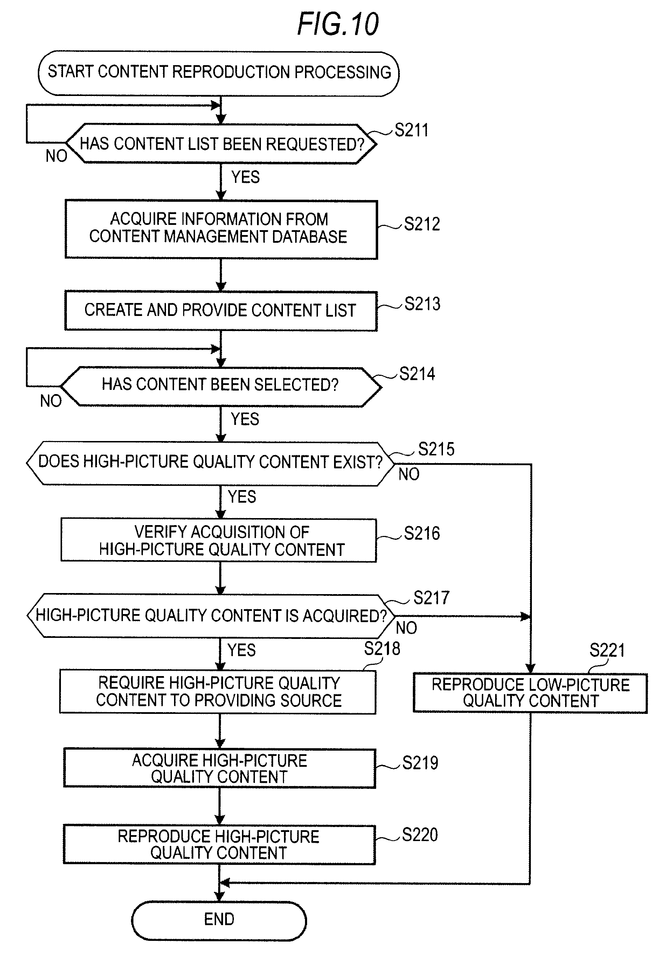

Next, an example of the flow of content reproduction processing by the content reproduction unit 204 of the hard disk recorder 101 will be explained with reference to a flowchart of Fig. 10. The processing corresponds to respective processing of Step S104 and Step S107 of Fig. 6.

When the content reproduction processing is started, the request receiving unit 231 of the content reproduction unit 204 controls the input unit 154 to receive a request of a content list from, for example, the user in Step S211. The request receiving unit 231 determines whether the content has been requested or not and waits until determined that the content list has been requested. When the request of the content list has been received, the process proceeds to Step S212.

In Step S212, the information acquisition unit 232 acquires information from the content management database 172 of the storage unit 161. In Step S213, the content list presentation unit 233 creates a content list based on the acquired information and controls the output unit 155 to present the content list by displaying the list on a monitor and so on.

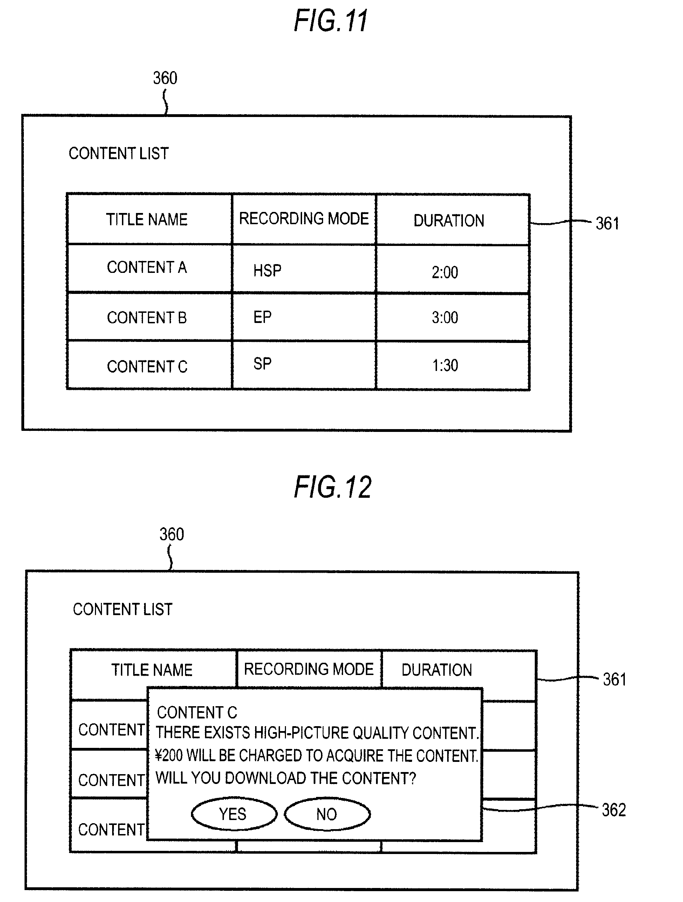

Fig. 11 is a chart showing an example of a content list presentation screen.

As shown in Fig. 11, a content list 361 created based on information registered in the content management database 172 is displayed on a content list presentation screen 360. As shown in Fig. 11, the content list 361 includes information such as a title name, a recording mode, reproducing time (duration) and the like of each content.

A format of the content list 361 is optional, and information other than the information in the list may be included, or part of the information may be omitted. The user can select the content to be reproduced by referring to the content list presented in this manner and input the selection by operating the input unit 154.

The selection receiving unit 234 controls the input unit 154 to receive selection of the content by the user and the like and determines whether the content has been selected or not is determined in Step S214, then, waits until determined that the content has been selected. When it is determined that the content has been selected, the process proceeds to Step S215.

In Step S215, the existence verification unit 235 determines whether there exists a high-picture quality content or not by referring to the field of the high-picture quality content existence flag of the record of the selected content in the content management database 172. The value of the high-picture quality content existence flag is "exist" and it is determined that there exists the high-picture quality content corresponding to the selected content, the process proceeds to Step S216.

In Step S216, the acquisition verification unit 236 controls the output unit 155 to display a verification screen on the monitor as well as controls the input unit 154 to allow the user to verify whether the high-picture content is acquired or not.

Fig. 12 is a chart showing an example of a content acquisition verification screen.

As shown in Fig. 12, a content acquisition verification screen 362 is displayed by being superimposed on the content list presentation screen 360. For example, when the user selects the content to be reproduced in the content list presentation screen 360, the content acquisition verification screen 362 as shown in Fig. 12 is displayed in the case that there exists the high-picture quality content corresponds to the content.

In the content acquisition verification screen 362, a message for verifying whether acquiring the high-picture quality content or not as well as decision branches are displayed. The user inputs the selection whether acquiring the high-picture quality content or not by operating the input unit.

The acquisition verification unit 236 determines whether acquiring the high-picture quality content or not based on the selection in Step S217. When it is determined that the user acquires the content, the process proceeds to Step S218.

In Step S218, the high-picture quality content request unit 237 specifies the providing source of the high-picture quality content by referring to the field of the providing server 356 of the record of the content to be reproduced in the content management database 172, and requests the high-picture quality content to the providing source.

The high-picture quality content acquisition unit 238 acquires the high-picture quality content supplied based on the request in Step S219. The high-picture quality content reproduction unit 239 controls the decoder 159 and the like to reproduce the acquired high-picture quality content and to output video and audio from the monitor and the speaker of the output unit 155 in Step S220.

When the reproduction of the high-picture quality content is completed, the content reproduction processing is ended.

When it is determined that there does not exist the high-picture quality content corresponding to the content selected by the user, the process proceeds to Step S221. Further, when it is determined that the high-picture quality content is not selected in Step S217, the process proceeds to Step S221.

In step S221, the low-picture quality content reproduction unit 241 reads the low-picture quality content 111 stored in the storage unit 161 selected by the user and the like and controls the decoder 159 and the like to reproduce the content and to output video and audio from the monitor and the speaker of the output unit 155.

When the reproduction of the low-picture quality content is ended, the content reproduction processing is ended.

As described above, the high-picture quality content 331 corresponding to the low-picture quality content 111 the reproduction of which has been instructed by the user is presented to the user, thereby allowing the user to view the higher picture quality content easily.

As described by referring to Fig. 6, when the search key is supplied from the hard disk recorder 101 and the search of metadata is requested, the metadata management server 102 performs the high-picture quality content search processing.

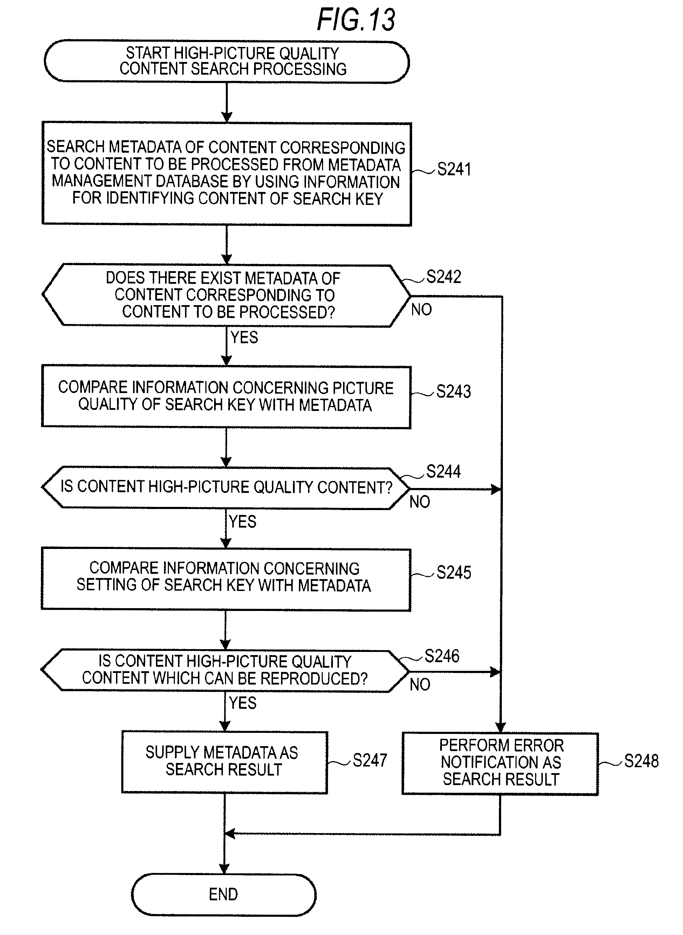

Another example of the flow of the high-picture quality content search processing will be explained by referring to a flowchart of Fig. 13.

When the high-picture quality content search processing is started, the metadata search unit 272 searches metadata of the content corresponding to the content to be processed from the metadata management database 281 by using information for identifying the content included in the search key supplied from the hard disk recorder 101 in Step S241. Then, the metadata search unit 272 determines whether there exists metadata of the content corresponding to the content to be processed or not in Step S242. When it is determined that the metadata exists, the process proceeds to Step S243.

In Step S243, the high-picture quality determination unit 273 compares information concerning picture quality of the content to be processed included in the search key supplied from the hard disk recorder 101 and information of the searched metadata. For example, the high-picture quality determination unit 273 compares information indicating the resolution and bit rate of the content to be processed with information indicating the resolution and bit rate included in the metadata.

In Step S244, the high-picture quality determination unit 273 determines whether the content corresponding to the searched metadata has higher picture quality than the content to be processed or not as the result of comparison. The content corresponding to the searched metadata is the content corresponding to the content to be processed. That is, the high-picture quality determination unit 273 determines the content is the high-picture quality content or not.

When it is determined that the content corresponding to the searched metadata is the high-picture quality content of the content to be processed, the process proceeds to Step S245.

In Step S245, the high-picture quality determination unit 273 compares information concerning setting available by the hard disk recorder 101 included in the search key supplied by the hard disk recorder 101 with information of the searched metadata. For example, the high-picture quality determination unit 273 compares information indicating the resolution, the bit rate, the encoding method and the like which can be reproduced by the hard disk recorder 101 included in the search key with information indicating the resolution, the bit rate, the encoding method and the like included in the metadata.

In Step S246, the high-picture quality determination unit 273 determines whether the content corresponding to the searched metadata is the high-picture quality content which can be reproduced by the hard disk recorder 101 or not as the result of comparison. When it is determined that the content is the high-picture quality content which can be reproduced by the hard disk recorder 101, the process proceeds to Step S247.

In Step S247, the metadata supply unit 274 controls the communication unit 264 to supply the searched metadata to the hard disk recorder 101 which is the request source as the search result. When the supply of the search result is completed, the high-picture quality content search processing is ended.

When it is determined that there does not exist metadata of the content corresponding to the content to be processed in Step S242, the process proceeds to Step S248. Furthermore, when it is determined that the content corresponding to the searched metadata does not the high-picture quality content of the content to be processed, the process proceeds to Step S248. Also when it is determined that the content is not the high-picture quality content which can be reproduced by the hard disk recorder 101, the process proceeds to Step S248.

In Step S248, the metadata supply unit 274 controls the communication unit 264 to perform error notification to the hard disk recorder 101 which is the request source as the search result. When the supply of the search result is completed, the high-picture quality content search processing is ended.

As described above, the metadata management server 102 supplies metadata of the high-picture quality content to the hard disk recorder 101, which corresponds to the content to be processed the reproduction of which has been instructed in the hard disk recorder 101, thereby notifying existence of the high-picture quality content to the user easily as well as acquiring the high-picture quality easily.

### <Second Embodiment>

### [Processing flow]

In the first embodiment, the explanation has been made in such a way that the hard disk recorder 101 makes searches for metadata of the high-picture quality contents with respect to all contents registered in the content management database 172, however, the timing of the search of metadata of the high-picture quality content is optional. For example, the hard disk recorder 101 may search for metadata of the high-picture quality content only with respect to a content to be reproduced after the user instructs the reproduction of the content.

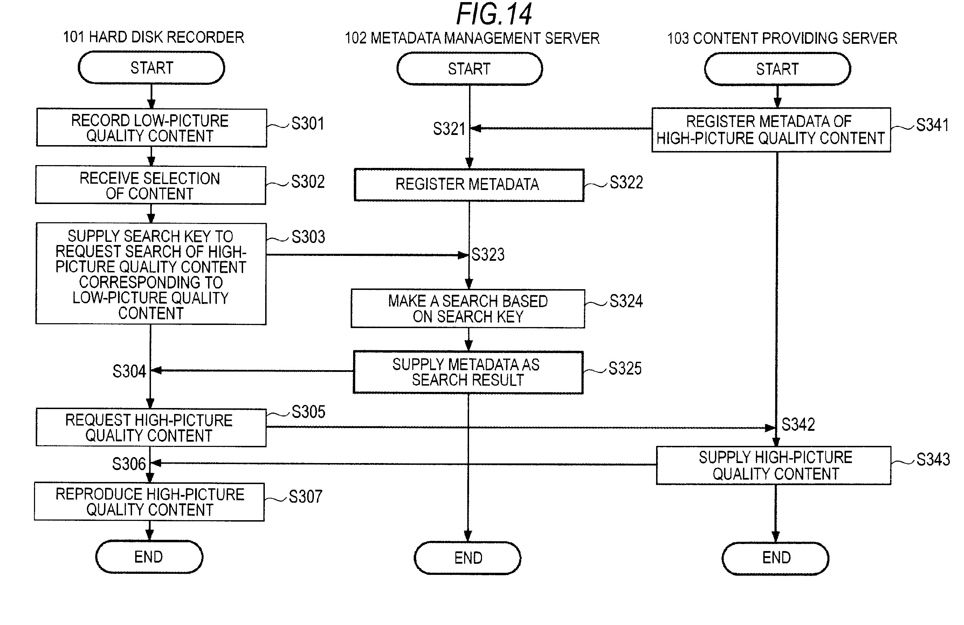

Fig. 14 is a flowchart for explaining another example of the whole processing flow of the information processing system 100 in the above case. Also in this case, the same processing as in the case explained by referring to Fig. 6 will be performed in principle.

That is, the same processing as Step S101 is performed in Step S301 by the hard disk recorder 101, the same processing as Step S141 is performed in Step S341 by the content providing server 103 and the same processing as Step S121 and Step S122 is performed in Step S321 and Step S322 by the metadata management server 102.

In this case, the hard disk recorder 101 receives the selection of the content to be reproduced by providing the content list and so on in Step S302 before searching metadata of the high-picture quality content.

When the content to be reproduced is selected, the hard disk recorder 101 supplies a search key including information concerning to the content to be reproduced to the metadata management server 102 to request the search of metadata of the high-picture quality content corresponding to the content to be reproduced (low-picture quality content 111).

The processing is the same as the processing in Step S102 except that the search is requested only with respect to the content to be reproduced.

The metadata management server 102 performs respective processing of Step S323 to Step S325 in the same manner as respective processing of Step S123 to Step S125.

In Step S304, the hard disk recorder 101 acquires a search result supplied from the metadata management server 102 in the same manner as in the case of Step S104.

When there exists the high-picture quality content, the hard disk recorder 101 performs respective processing of Step S305 to Step S307 in the same manner as respective processing of Step S105 to Step S107 and acquires the high-picture quality content to reproduce the content.

In response to these processing, the content providing server 103 performs respective processing of Step S342 to Step S343 in the same manner as respective processing of Step S142 and Step 143.

The high-picture quality content is provided as described above, thereby verifying the existence of the high-picture quality content by the hard disk recorder 101 only with respect to the content the reproduction of which has been instructed by the user. That is, the hard disk recorder 101 can reduce execution of unnecessary search processing such that the high-picture quality contents the reproduction of which are not instructed by the user.

According to this, processing loads concerning the search in the hard disk recorder 101 and the metadata management server 102 are reduced. It is also possible to reduce the information amount to be stored in the hard disk recorder 101.

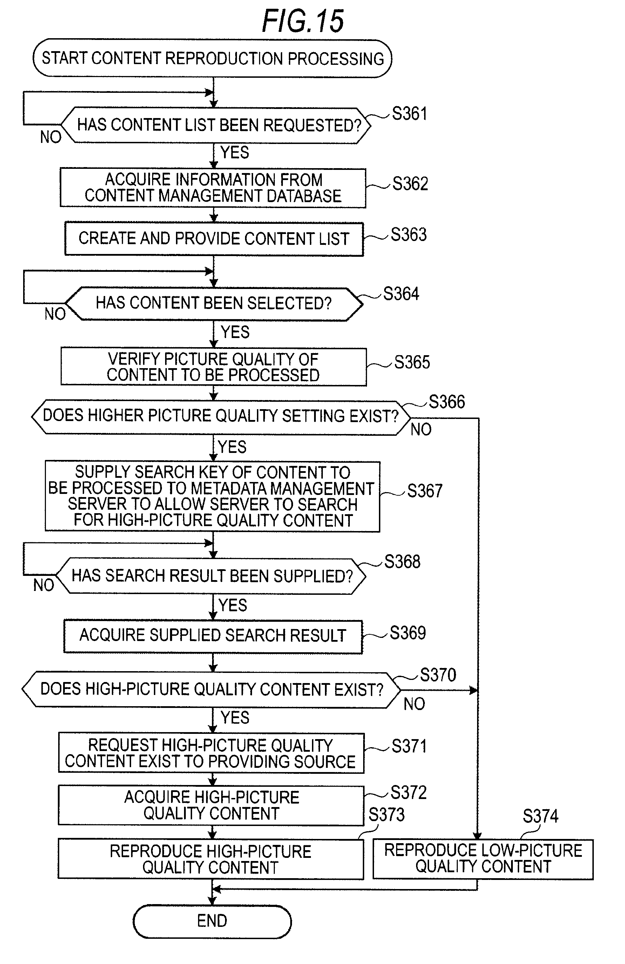

An example of the flow of the content reproduction processing in the above case will be explained with reference to a flowchart of Fig. 15.

When the content reproduction processing in this case is started, the request receiving unit 231, the information acquisition unit 232, the content list presentation unit 233 and the selection receiving unit 234 of the content reproduction unit 204 execute respective processing of Step S361 to Step S364 in the same manner as respective processing of Step S211 to Step S214 of Fig. 10.

When it is determined that the content has been selected from the content list in Step S364, the process proceeds to Step S365.

The picture quality verification unit 222, the search key supply unit 223, the search result acquisition unit 224 and the high-picture quality content verification unit 225 of the record update unit 203 execute respective processing of Step S365 to Step S370 in the same manner as respective processing of Step S182 to Step S187 of Fig. 9.

When it is determined that there exists the high-picture quality content in Step S370, the process proceeds to Step S371.

The high-picture quality content request unit 237, the high-picture quality content acquisition unit 238 and the high-picture quality content reproduction unit 239 in the content reproduction unit 204 execute respective processing of Step S371 to Step S373 in the same manner as respective processing of Step S218 to Step S220 of Fig. 10.

When the processing of Step S373 is completed, the content reproduction processing is ended.

When it is determined that there does not exist higher picture quality setting in Step S366, the process proceeds to Step S374. Furthermore, when it is determined that there does not exist a high-picture quality content which can be reproduced and which corresponds to the content to be reproduced in Step S370, the process proceeds to Step S374.

In Step S374, the low-picture quality content reproduction unit 241 of the content reproduction unit 204 reads and reproduces the low-picture quality content 111 stored in the storage unit 161, then, video and audio are outputted from the output unit 155 in the same manner as in the case of Step S221 of Fig. 10.

When the processing of Step S374 is completed, the content reproduction processing is ended.

The hard disk recorder 101 can reproduce contents as described above. The other processing is executed in the same manner as the first embodiment in principle.

As described above, the user can view the higher quality content more easily also in this case.

It is also preferable that the hard disk recorder 101 allows the user to check whether acquiring and reproducing the searched high-picture quality content or not in the same manner as the first embodiment.

In the above explanation, the metadata management server 102 verifies whether the content corresponding to the searched metadata is the high-picture quality content or not, however, it is not limited to this, and it is also preferable that the hard disk recorder 101 makes a verification thereof.

In this case, the metadata management server 102 returns all metadata searched based on the search key to the hard disk recorder 101. The hard disk recorder 101 compares information included in the metadata with information concerning the content to be processed to verify whether the content corresponding to the metadata is the high-picture quality content of the content to be processed or not.

### <Third Embodiment>

### [Configuration of the information processing system]

In the above explanation, the existence of the high-picture quality content as well as the providing source server thereof are verified by using the metadata management server 102, however, it is not limited to this, and it is preferable that the hard disk recorder 101 verifies the existence of the high-picture quality content with respect to the content providing server 103.

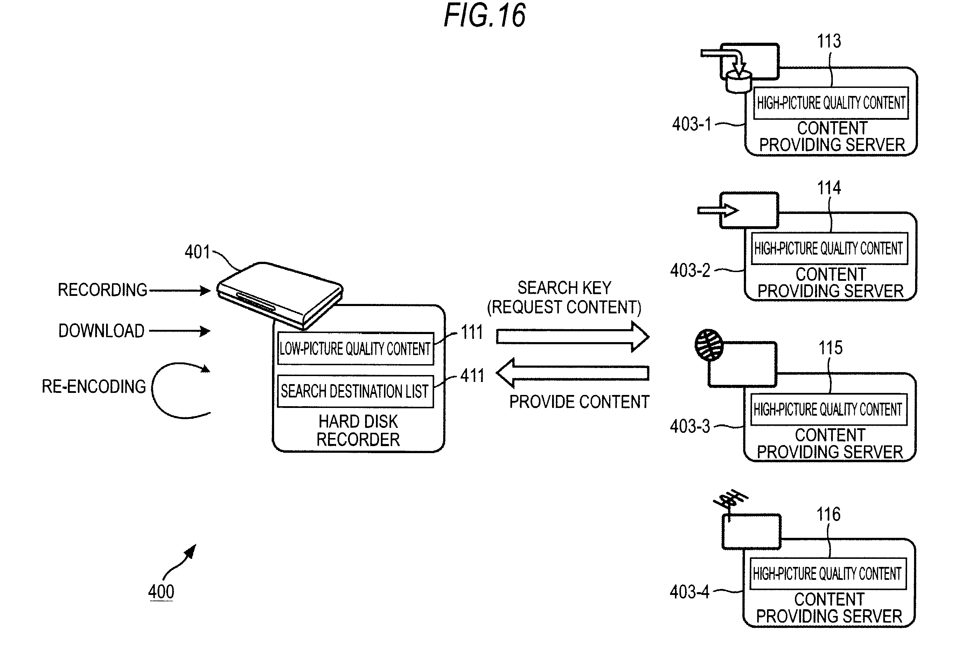

Fig. 16 is a block diagram showing another configuration example of the information processing system to which the invention is applied.

As shown in Fig. 16, in an information processing system 400 in this case, the metadata management server 102 is omitted, and a hard disk recorder 401 and content providing servers 403-1 to 403-4 are provided. In the following description, when it is not necessary that the content providing servers 403-1 to 403-4 are distinguished from one another when they are explained, they are referred to as the content providing server 403.

The hard disk recorder 401 is a device similar to the hard disk recorder 101 in principle. In the hard disk recorder 401, a search destination list 411 which is a list of search destinations of high-picture quality contents is previously registered.

The search destination list 411 includes, for example, URL and the like of the content providing server 403. The hard disk recorder 401 supplies the search key to the content providing server 403 based on the search destination list 411 to request the search for the high-picture quality contents.

The content providing servers 403-1 to 403-4 respectively correspond to the content providing servers 103-1 to 103-4. The content providing server 403 may include the high-picture quality contents 113 to 116 corresponding to the low-picture quality content 111 in the same manner as in the case of the content providing server 103.

The content providing server 403 the search of which has been requested searches for the high-picture quality content corresponding to the content to be processed among a content group included itself and provides the content to the hard disk recorder 401 when there exists the high-picture quality content.

The hard disk recorder 401 reproduces and outputs the supplied high-picture quality content.

### [Configuration of devices]

Next, the configuration of respective devices in this case will be explained.

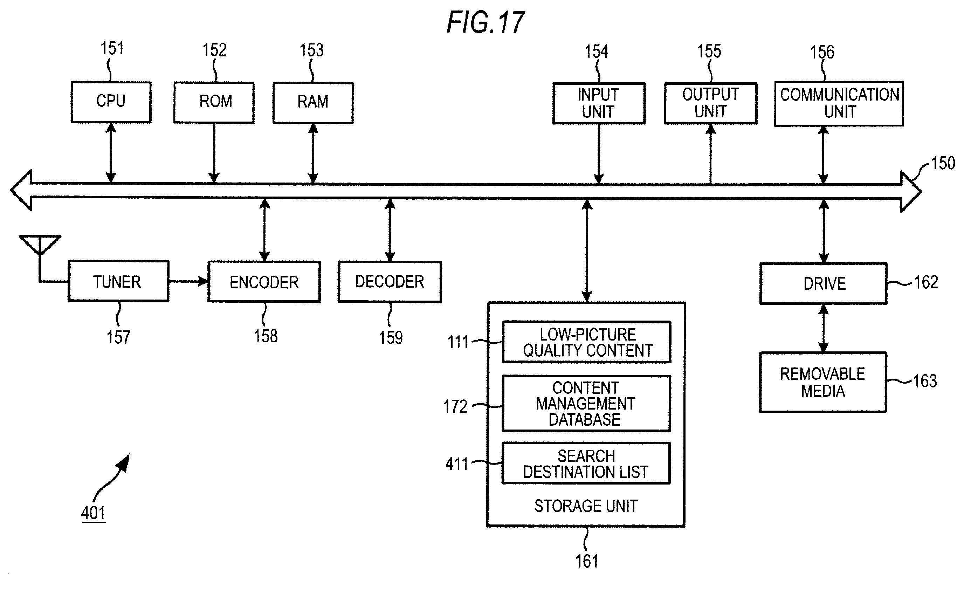

Fig. 17 is a block diagram showing a main configuration example of the hard disk recorder 401 of Fig. 16.

As shown in Fig. 17, the hard disk recorder 401 includes the same configuration as the hard disk recorder 101 in principle. In the storage unit 161, the search destination list 411 is stored.

The search destination list 411 is previously stored in the storage unit 161. It is naturally preferable that the search destination list 411 is updated appropriately. For example, the user may add information of a new search destination as well as may change or delete information of the search destination list 411 by operating the input unit 154. It is naturally preferable that the search destination list 411 is updated based on information supplied from other apparatus acquired by the communication unit 156.

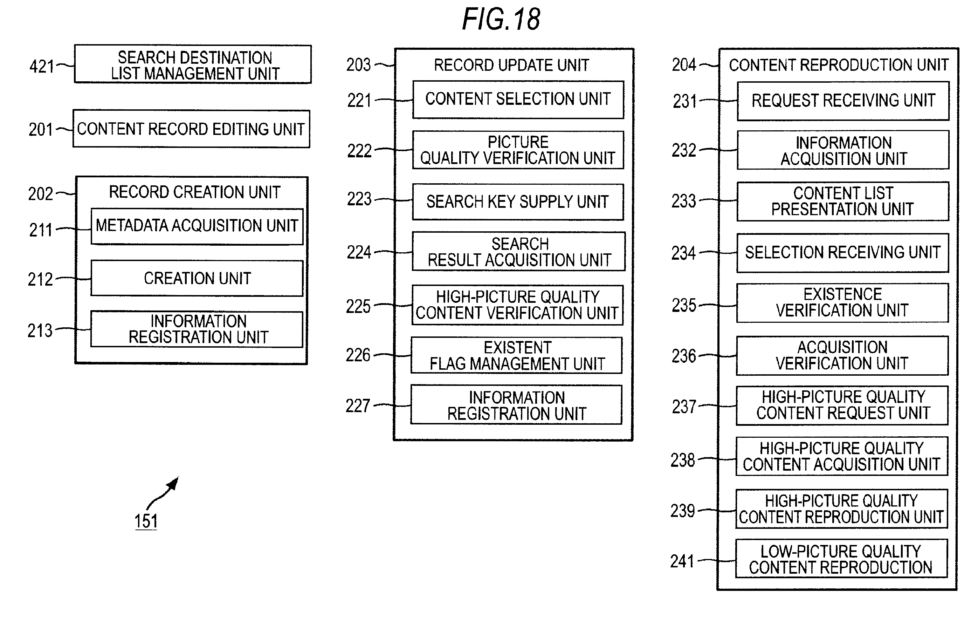

Fig. 18 is a functional block diagram showing an example of main functions included in the CPU 151 of Fig. 17.

In the case of the hard disk recorder 401, the CPU 151 includes a search destination list management unit 421 in addition to the functional blocks explained by referring to Fig. 3. The search destination list management unit 421 manages the search destination list 411 stored in the storage unit 161 and makes addition, change, deletion and so on appropriately.

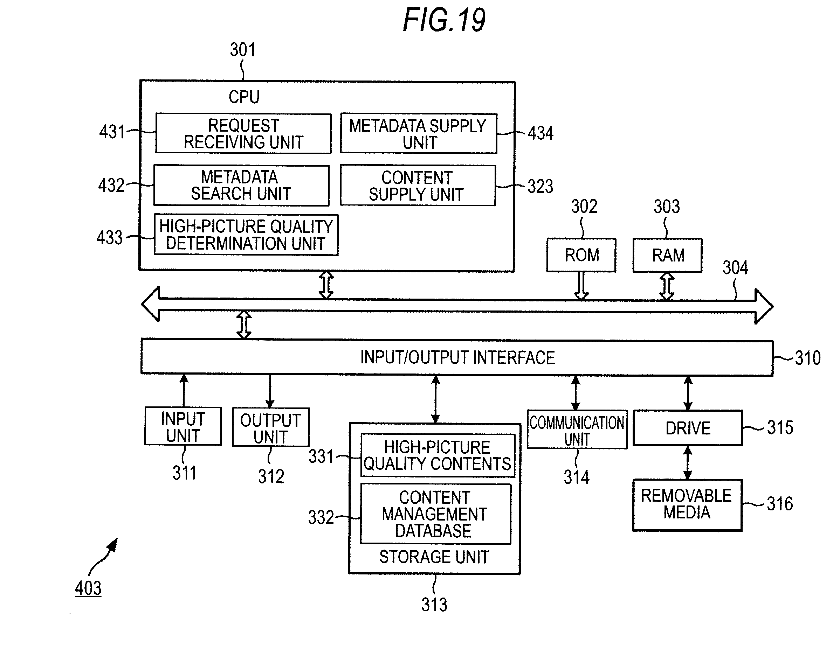

Fig. 19 is a block diagram showing a main configuration example of the content providing server 403 of Fig. 16.

As shown in Fig. 19, the content providing server 403 includes the same configuration as the content providing server 103 in principle.

The CPU 301 includes a request receiving unit 431, a metadata search unit 432, a high-picture quality determination unit 433, a metadata supply unit 434 and the content supply unit 323 as functional blocks.

The request receiving unit 431 receives a request for searching metadata of the high-picture quality content from other apparatus such as the hard disk recorder 101. The request receiving unit 431 acquires the search key and the like through the communication unit 314 and receives the request.

The request receiving unit 431 controls the communication unit 314 to also receive a request for the high-picture quality content from other devices such as the hard disk recorder 101.

The metadata search unit 432 is a functional block similar to the metadata search unit 272, searching for metadata of a content designated by the search key from the content management database 332 of the storage unit 313 in accordance with the request for searching metadata received by the request receiving unit 431.

The high-picture quality determination unit 433 is a functional block similar to the high-picture quality determination unit 273, determining whether the content corresponding to metadata searched by the metadata search unit 432 is the high-picture quality content or not. For example, the high-picture quality determination unit 433 compares information concerning picture quality of the searched metadata with information concerning picture quality included in the search key. The high-picture quality determination unit 433 determines whether the content corresponding to metadata is the high-picture quality content corresponding to the content to be processed in the hard disk recorder 101 or not.

The metadata supply unit 434 is a functional block similar to the metadata supply unit 274, controlling the communication unit 314 to supply metadata corresponding to the high-picture quality content to the request source (for example, the hard disk recorder 401) as a response to the search request.

The content supply unit 323 reads the requested high-picture quality content 331 from the storage unit 313 based on the request for the high-picture quality content received by the request receiving unit 431 and supplies the content to the request source (for example, the hard disk recorder 401) through the communication unit 314.

### [Processing flow]

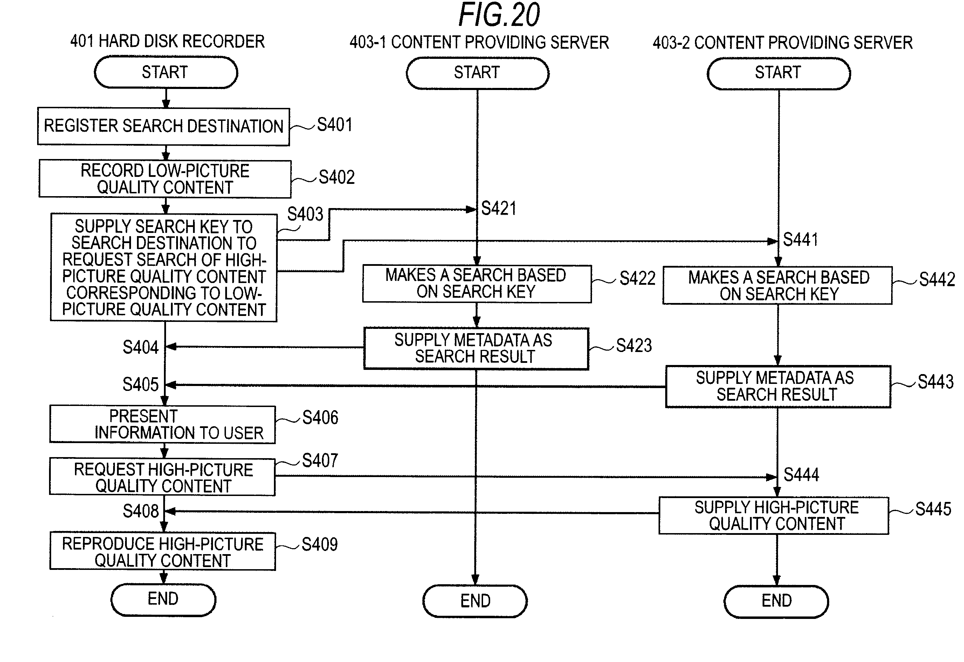

Next, the processing flow in the above case will be explained. An example of the whole processing flow of the information processing system 400 will be explained with reference to a flowchart of Fig. 20. In this case, assume that the content providing server 403-1 and the content providing server 403-2 are designated as search destinations by the search destination list 411 for convenience of explanation.

For example, when a new search destination is inputted through, for example, the input unit 154, the search destination list management unit 421 of the hard disk recorder 401 registers the new search destination in the search destination list 411 in the storage unit 161 in Step S401.

When the low-picture quality content 111 is acquired or created, the content record editing unit 201 records the low-picture quality content 111 in the storage unit 161 in Step S402. At this time, the record creation unit 202 creates a new record in the content management database 172 concerning the newly recorded low-picture quality content 111.

The record update unit 203 supplies the search key to the search destinations designated by the search destination list 411 and requests the search of metadata of the high-picture quality content corresponding to the low-picture quality content 111 in Step S403. The record update unit 203 requests the content providing server 403-1 and the content providing server 403-2 to search the metadata through the communication unit 156.

In the content providing server 403-1, the request receiving unit 431 receives the request through the communication unit 314 in Step S421. The metadata search unit 432 searches for metadata based on the request (search key) in Step S422. The high-picture quality determination unit 433 determines whether the content of the searched metadata is the high-picture quality content or not. In Step S423, the metadata supply unit 434 supplies the metadata of the high-picture quality content as the search result to the hard disk recorder 401 as the request source. The record update unit 203 of the hard disk recorder 401 acquires the search result supplied from the content providing server 403-1 in Step S404.

Similarly, in the content providing server 403-2, the request receiving unit 431 receives the request for searching metadata through the communication unit 314 in Step S441. The metadata search unit 432 searches for metadata based on the request (search key) in Step S442. The high-picture quality determination unit 433 determines whether the content of the searched metadata is the high-picture quality content or not. In Step S443, the metadata supply unit 434 supplies metadata of the high-picture quality content to the hard disk recorder 401 as the search result. The record update unit 203 of the hard disk recorder 401 acquires the search result supplied from the content providing server 403-2 in Step S405.

The content reproduction unit 204 of the hard disk recorder 401 provides the user with information by controlling the output unit 155 and the like in Step S406. When the user selects the content to be reproduced and instructs the acquisition of the high-picture quality content, the content reproduction unit 204 requests the high-picture quality content with respect to the content providing server 403-2 which is the providing source of the high-picture quality content corresponding to the content to be reproduced based on information of the search result in Step S407.

The request receiving unit 431 of the content providing server 403-2 receives the request through the communication unit 314 in Step S444. The content supply unit 323 reads the requested high-picture quality content from the storage unit 313 and supplies the content to the hard disk recorder 401 which is the request source through the communication unit 314 in Step S445.

The content reproduction unit 204 of the hard disk recorder 401 acquires the high-picture quality content through the communication unit 156 in Step S408, and controls the decoder 159 and the like to reproduce the acquired high-picture quality content and to output video and audio from the output unit 155 in Step S409.

As described above, the hard disk recorder 401 can request an optional search destination to search for metadata by using the search destination list. According to this, the hard disk recorder 401 can use plural search destinations. That is, the search of (metadata of) the high-picture quality content can be performed among much more information, therefore, it can be expected that the search becomes more successful. In addition, the metadata management server 102 is unnecessary, therefore, the invention can be applied to network systems having more various configurations.

Also in the third embodiment, it is preferable that the hard disk recorder 101 verifies whether the content corresponding to the searched metadata is the high-picture quality content or not in the same manner as the first embodiment and the second embodiment.

The above series of processing can be executed by hardware as well as software. When the above series of processing is executed by software, programs included in the software are installed from networks or recording media.

The recording media includes not only the removable media 163, the removable media 266 or the removable media 316 such as a magnetic disk (including a flexible disk), an optical disk (including a CD-ROM (Compact Disk-Read Only Memory), a DVD (Digital Versatile Disk)), a magneto-optical disk (including MD (Mini-Disk) (Trademark)) and a semiconductor memory, in which programs are recorded, which are distributed for delivering programs to the user in a state of being separated from a device body, but also includes the ROM 152, the ROM 252 or the ROM 302 as well as a hard disk included in the storage unit 161, the storage unit 263 or the storage unit 313 in which programs are recorded, which is delivered to an administrator in a state of being incorporated in the device body in advance as shown in Fig. 2, Fig. 4, Fig. 5, Fig. 17 and Fig. 19.

Programs executed by a computer may be programs in which processing is performed in time series along the order explained in the present specification as well as may be programs in which processing is performed in parallel or at necessary timing such that when calling is performed.

In the specification, steps in which programs recorded in the recording media include processing performed in time series along the described order as well as processing performed in parallel or individually which is not always performed in time series.

In the specification, the system represents the whole device including plural devices (apparatuses).

In the above description, it is also preferable that the configuration explained as one device (or one processing unit) is divided into plural devices (or plural processing units). Conversely, it is preferable that the configuration explained as plural devices (plural processing units) in the above description are configured as one device (one processing unit). It is naturally preferable that a configuration other than the above configurations may be added to configurations of respective devices (or respective processing units). It is further preferable that part of a configuration of a certain device (or a processing unit) is included in another device (or another processing unit) as long as the configuration and operation as the whole system are the same. That is, the embodiments of the invention are not limited to the above embodiments and can be variously modified within a scope not departing from the gist of the invention.

The present application contains subject matter related to that disclosed in Japanese Priority Patent Application JP 2009-154922 filed in the Japan Patent Office on June 30, 2009, the entire contents of which is hereby incorporated by reference.

## Claims

1. An information processing apparatus comprising:
a search request means for requesting another information processing apparatus to search metadata of a high-picture quality content corresponding to a content which has higher picture quality than the content;
a metadata acquisition means for acquiring the metadata supplied from another information processing apparatus as a search result in response to the request by the search request means;
an association means for associating information indicating a providing source of the high-picture quality content which is included in the metadata acquired by the metadata acquisition means with metadata of the content;
a high-picture quality content acquisition means for acquiring the high-picture quality content from the providing source of the high-picture quality content indicated by the information associated with the metadata of the content by the association means when the content is processed; and
a high-picture quality content reproduction means for reproducing the high-picture quality content acquired by the high-picture quality content acquisition means.

2. The information processing apparatus according to claim 1,
wherein the search request means supplies a search key including information for identifying the contents, information concerning picture quality of the content and information concerning setting available by the information processing apparatus to another information processing apparatus to allow the apparatus to search for metadata of the high-picture quality content by using the search key.

3. The information processing apparatus according to claim 1 or 2, further comprising:
a selection receiving means for receiving a selection instruction of a content to be processed; and
an acquisition verification means for verifying whether the high-picture quality content corresponding to the content selected by the selection instruction received by the selection receiving means is acquired or not,
wherein the high-picture quality content acquisition means acquires the high-picture quality content from the providing source of the high-picture quality content when the acquisition of the high-picture quality content is verified by the acquisition verification means.

4. The information processing apparatus according to claim 3, further comprising:
a flag information management means for managing flag information indicating existence of the high-picture quality content and setting the flag information when the information is associated with metadata of the content by the association means; and
an existence verification means for verifying whether there exists the high-picture quality content corresponding to the content selected by the selection instruction received by the selection receiving means or not based on the flag information managed by the flag information management means,
wherein the high-picture quality content acquisition means acquires the high-picture quality content from the providing source of the high-picture quality content when the acquisition of the high-picture quality content is verified by the acquisition verification means.

5. The information processing apparatus according to claim 4, further comprising:
a low-picture quality content reproduction means for reproducing the content having lower picture quality than the high-picture quality content when it is verified that there does not exist the high-picture quality content by the existence verification means.

6. The information processing apparatus according to claim 3, further comprising:
a list presentation means for presenting a list of contents which can be processed,
wherein the selection receiving means receives selection instruction for selecting a content to be processed from the list presented by the list presentation means.

7. The information processing apparatus according to one of the claims 3 to 6,
wherein the search request means requests another information processing apparatus to search metadata of the high-picture quality content corresponding to the content selected by the selection instruction received by the selection receiving means.

8. The information processing apparatus according to one of the claims 1 to 7, further comprising:
a search destination information management means for managing search destination information indicating another information processing apparatus to which the search for metadata of the high-picture quality content is requested,
wherein the search request means requests another information processing apparatus included in the search destination information managed by the search destination information management means to search metadata of the high-picture quality content.

9. An information processing method comprising the steps of:
requesting another information processing apparatus to search metadata of a high-picture quality content corresponding to a content which has higher picture quality than the content by a search request means of the information processing apparatus;
acquiring the metadata supplied from another information processing apparatus as a search result in response to the request by a metadata acquisition means of the information processing apparatus;
associating information indicating a providing source of the high-picture quality content which is included in the metadata to be acquired with metadata of the content by an association means of the information processing apparatus;
acquiring the high-picture quality content from the providing source of the high-picture quality content indicated by the information associated with the metadata of the content when the content is processed by a high-picture quality content acquisition means of the information processing apparatus; and
reproducing the acquired high-picture quality content by a high-picture quality content reproduction means of the information processing apparatus.

10. A computer-readable medium storing a program for allowing a computer to function as:
a search request means for requesting another information processing apparatus to search metadata of a high-picture quality content corresponding to a content which has higher picture quality than the content;
a metadata acquisition means for acquiring the metadata supplied from another information processing apparatus as a search result in response to the request by the search request means;
an association means for associating information indicating a providing source of the high-picture quality content which is included in the metadata acquired by the metadata acquisition means with metadata of the content;
a high-picture quality content acquisition means for acquiring the high-picture quality content from the providing source of the high-picture quality content indicated by the information associated with the metadata of the content by the association means when the content is processed; and
a high-picture quality content reproduction means for reproducing the high-picture quality content acquired by the high-picture quality content acquisition means.
